# EUROPÄISCHE PATENTSCHRIFT

(11) **EP 1 223 100 B1**
(45) Veröffentlichungstag und Bekanntmachung des Hinweises auf die Patenterteilung: **13.10.2004**
(21) Anmeldenummer: 01130033.2
(22) Anmeldetag: 18.12.2001
(51) Int. Cl.: B62J 17/08

(54) **Verwindungssteifer Fahrgastkäfig, insbesondere für Zweiräder**
Distortion resistant passenger cage, especially for two wheelers
Cage de passager résistant à la déformation, notamment pour véhicules à deux roues

(30) Priorität: 11.01.2001 DE 10100898
(43) Veröffentlichungstag der Anmeldung: 17.07.2002
(73) Patentinhaber: Bayerische Motoren Werke Aktiengesellschaft, 80809 München (DE)
(72) Erfinder: Nurtsch, Bernd, 83555 Gars (DE); Heiner, Lothar, 80933 München (DE)

(56) Entgegenhaltungen:
- EP-A- 0 965 470
- DE-A- 19 505 448
- DE-A- 19 629 879
- DE-U- 29 920 879

## Beschreibung

Die Erfindung betrifft einen verwindungssteifen Fahrgastkäfig, insbesondere für Motorräder, umfassend zwei mit einem Fahrzeugrahmen verbundene, einen Überrollbügel bildende Holme, zwei mit den Holmen verbundene Schulterschutzbügel, eine zwischen den Holmen angebrachte Windschutzscheibe und ein mit dem Fahrzeugrahmen verbundenes, ein Dach bildendes Oberteil.

Ein derartiger verwindungssteifer Fahrgastkäfig ist in der DE 195 05 448 A1 und in der DE 196 29 879 A1 offenbart. Dieser Fahrgastkäfig wurde für ein motorgetriebenes Zweirad entwickelt, bei dem für den Fahrer ein Rundumschutz gewährleistet ist, so daß das Tragen eines Helms entbehrlich ist. Ein solches Fahrzeug verbindet daher das Fahrerlebnis eines Motorrades mit demjenigen eines offenen Sportwagens. In der Fahrpraxis hat sich aber gezeigt, daß bei höheren Geschwindigkeiten im Nackenbereich des Fahrers starke Verwirbelungen entstehen, die in Verbindung mit der Umgebungstemperatur und der Dauer äußerst unangenehm werden können. Ein betriebsinterner Versuch zur Verhinderung derartiger Verwirbelungen bestand darin, den Bereich zwischen den beiden Holmen des Fahrgastkäfigs in Höhe des Kopfes eines Fahrers durch eine hintere Blende zu verschließen, wie sie bei offenen Sportwagen als sogenanntes Windschott bekannt ist. Es zeigte sich aber, daß durch ein solches Windschott die Luftströmung seitlich nach vorne umgelenkt wird, was vom Fahrer als überaus störend empfunden wird. Ein Versuch zur Vermeidung dieser störenden Luftströmung bestand darin, den Bereich zwischen dem Schulterschutzbügel und dem darüber befindlichen Holm des Fahrgastkäfigs jeweils durch eine seitliche Blende aus Glas oder einem durchsichtigen Kunststoffmaterial zu verschließen. Durch diese Maßnahme kann zwar der Kopf des Fahrers weitgehend von störenden Luftströmungen geschützt werden. Diesem Vorteil steht aber der Nachteil gegenüber, daß der Eindruck des Fahrens in einem offenen Fahrzeug verloren geht, wobei noch erschwerend hinzukommt, daß die Seitenwindempfindlichkeit des Fahrzeugs drastisch zunimmt.

Der Erfindung liegt die Aufgabe zugrunde, den gattungsgemäßen Fahrgastkäfig dahingehend weiterzubilden, daß der Kopf des Fahrers vor unangenehmen Luftströmungen geschützt ist, ohne daß die Seitenwindempfindlichkeit des Fahrzeugs zunimmt.

Erfindungsgemäß wird diese Aufgabe dadurch gelöst, daß der Bereich zwischen den beiden Holmen in Höhe des Kopfes eines Fahrers durch eine hintere Blende geschlossen ist, und daß der Bereich zwischen dem Schulterschutzbügel und dem darüber befindlichen Holm jeweils durch eine seitliche Blende geschlossen ist, wobei die hintere und die beiden seitlichen Blenden aus einem winddurchlässigen Material bestehen.

Es hat sich überraschenderweise gezeigt, daß durch die Kombination der hinteren und der beiden seitlichen Blenden die Entstehung störender Luftwirbel im Kopfbereich des Fahrers verhindert werden kann, ohne jedoch die Seitenwindempfindlichkeit des Fahrzeugs zu erhöhen. Die Ursache für diese vorteilhafte Wirkung der erfindungsgemäßen Blenden besteht darin, daß diese aus einem winddurchlässigen Material bestehen.

Für die Blenden hat sich ein netzartiges Textilmaterial als besonders vorteilhaft erwiesen.

Um das netzartige Textilmaterial in einem gestrafften flatterfreien Zustand zu halten, ist vorgesehen, daß dieses im Randbereich der Blende an einem Rahmen befestigt ist.

Im Hinblick darauf, daß solche Blenden als Zubehörteil in den Handel gebracht und vom Erwerber nachträglich an einem entsprechenden Fahrzeug angebracht werden können, ist vorgesehen, daß die Blenden durch Scharniere miteinander gelenkig verbunden sind.

Ein bevorzugtes Ausführungsbeispiel der Erfindung ist in den Zeichnungen dargestellt und wird im folgenden näher erläutert. Es zeigt:
Fig. 1 eine Seitenansicht des oberen Bereichs eines verwindungssteifen Fahrgastkäfigs,
Fig. 2 eine Rückansicht des oberen Bereichs des Fahrgastkäfigs nach Fig. 1,
Fig. 3 eine perspektivische Darstellung eines mit einem verwindungssteifen Fahrgastkäfig versehenen motorgetriebenen Zweirades,
Fig. 4 einen Schnitt durch einen Randbereich einer Blende, und
Fig. 5 einen Schnitt durch ein Scharnier zur gelenkigen Verbindung von zwei Blenden.

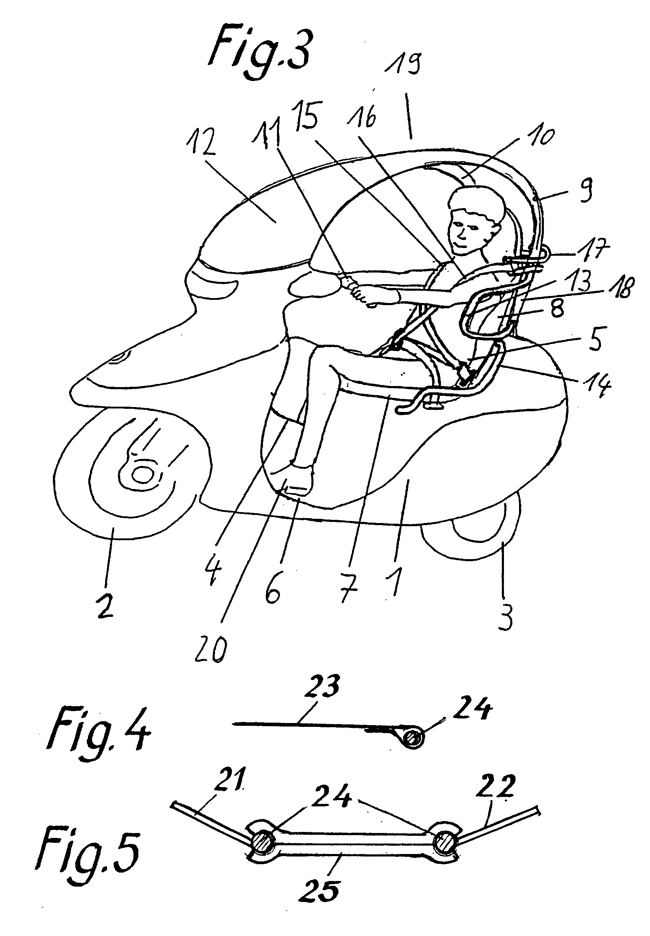

Fig. 3 zeigt ein mit einem verwindungsteifen Fahrgastkäfig versehenes motorgetriebenes Zweirad. Aufgrund einer Verkleidung 1 sind nur einige der Teile des Fahrzeugrahmens sichtbar. Die Verkleidung 1 erstreckt sich im wesentlichen über den unteren Bereich des Zweirades von vorne über dem Vorderrad 2 nach hinten über das Hinterrad 3. Der Durchstieg 4 des Fahrzeugrahmens ist ebenfalls verkleidet. Vom Fahrzeugrahmen sichtbar ist eine Schutzeinrichtung, die so gestaltet ist, daß sich für den Fahrer 5 ein seitlich offener, den Durchstieg ermöglichender Fahrgastkäfig ergibt. Dieser Käfig wird im wesentlichen begrenzt von einer Aufstellfläche 6 für den jeweiligen Fuß 20 des Fahrers 5, die nach oben in den Durchstieg 4 übergeht, und einen Sitz 7 für den Fahrer 5, der an einer nicht sichtbaren Sitzeinrichtung befestigt ist und als Sitzschale mit einem Rückenteil 8 ausgebildet ist, das den Käfig für den Fahrer 5 nach hinten begrenzt.

Des weiteren verlaufen hinter dem Rückenteil 8 der Sitzschale untereinander verbundene Holme 9, 10 einer sich vor, über und hinter dem Fahrer erstreckenden Schutzeinrichtung jeweils auf einer Seite des Zweirades über den Fahrer 5 hinweg nach vorne vor eine Lenkeinrichtung 11. Im Bereich vor dem Fahrer 5 ist zwischen den beiden Holmen 9, 10 eine Windschutzscheibe 12 angebracht.

An den Holmen 9, 10 ist ein die Kontur mindestens der Schutzeinrichtung zur Seite hin überragender Schulterschutzbügel 13 angebracht. Ein ebenfalls die Kontur mindestens der Schutzeinrichtung zur Seite hin überragender Beckenschutzbügel 14 ist an (nicht gezeigten) zusätzlichen Rahmenelementen befestigt. Zusätzlich ist der Sitz 7 mit seinem Rückenteil 8 an der Schutzeinrichtung befestigt. Dadurch wird eine Stabilität erreicht, daß für den Fahrer 5 eine Sicherheitsgurteinrichtung vorgesehen werden kann, die am Fahrzeugrahmen und/oder am Sitz 7 mit Rückenteil 8 befestigt ist. Die Sicherheitsgurteinrichtung besteht aus zwei sogenannten Dreipunktgurten 15, 16 für den Fahrer 5, von denen jeweils einer auf einer Seite des Zweirades angebracht und auf der anderen Seite des Zweirades an diesem über ein Gurtschloß festlegbar ist. Zum Umlenken der beiden Sicherheitsgurtbänder 15, 16 ist in Schulternähe des Fahrers 5 eine Umlenkeinrichtung vorgesehen, die aus jeweils einem Umlenkbügel 17 für jedes der beiden Sicherheitsgurtbänder 15, 16 besteht. Jeder Umlenkbügel 17 ist an der Schutzeinrichtung hinter dem Fahrer 5 angebracht und stützt sich bei verformender Belastung an dieser ab. So wird im Falle eines Unfalles der Fahrer 5 durch den Fahrzeugrahmen geschützt, unter anderem, weil er durch die Sicherheitsgurteinrichtung am Sitz 7 mit Rückenteil 8 über mindestens vier Punkte im Fahrzeug, mindestens zwei in Beckennähe und zwei in Schulternähe fixiert ist.

Des weiteren ist die Schutzeinrichtung zweigeteilt in ein fest mit dem Fahrzeugrahmen verbundenes Rückenteil 18 hinter dem Fahrer 5 und ein am Fahrzeugrahmen lösbar befestigtes Oberteil 19 über und vor dem Fahrer 5. Das Öberteil 19 wird durch die Umlenkbügel 17 mit dem Rückenteil 18 formschlüssig und durch vorne am Fahrzeugrahmen angebrachte, nicht sichtbare Klemmschellen mit diesem reibschlüssig verbunden.

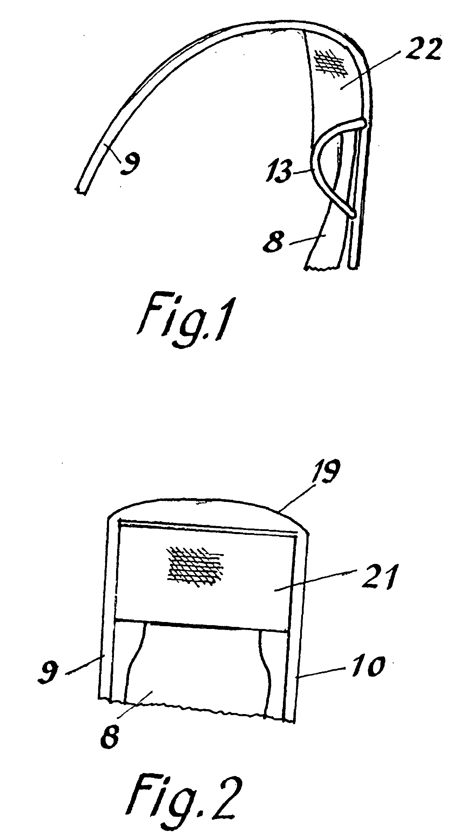

Wenn sich das Zweirad in Fahrt befindet, dann wird der Fahrtwind von der Windschutzscheibe 12 nach oben umgelenkt, und er strömt entlang dem Oberteil 19 nach hinten. An der Hinterkante des Oberteils 19 reißt der Luftstrom ab, und es entstehen Verwirbelungen, die bis in den Kopfbereich des Fahrers 5 reichen. Um den Fahrer vor solchen Verwirbelungen zu schützen, sind eine hintere Blende 21 und zwei seitliche Blenden 22 vorgesehen. Wie aus Fig. 1 hervorgeht, erstreckt sich jede seitliche Blende 22 in dem Bereich zwischen dem Schulterschutzbügel 13 und dem darüber befindlichen Holm 9 bzw. 10. Gemäß Fig. 2 erstreckt sich die hintere Blende 21 in Höhe der Nackenstütze zwischen den beiden Holmen 9, 10 nach oben bis zum Oberteil 19. Jede der Blenden 21, 22 besteht aus einem winddurchlässigen netzartigen Textilmaterial 23. Dieses Textilmaterial kann aus witterungsbeständigem Kunststoff hergestellt sein. Um das Textilmaterial 23 in einem gestrafften flatterfreien Zustand zu halten, ist es im Randbereich der Blende 21 bzw. 22 an einem versteifenden Rahmen 24 befestigt. Wie dies aus Fig. 4 hervorgeht, ist ein Randbereich des Textilmaterials 23 um den Rahmen 24 herum auf sich selbst umgefaltet und durch Vernähen oder Verkleben befestigt. Der Rahmen 24 kann zur Befestigung der Blende 21 bzw. 22 benutzt werden, indem er in der Art eines Keders in eine entsprechende Nut in oder an den Holmen 9, 10 bzw. der Schulterschutzbügel 13 eingeführt wird.

Die hintere Blende 21 kann mit den beiden seitlichen Blenden 22 durch mehrere Scharniere 25 gelenkig verbunden sein. Wie aus Fig. 5 hervorgeht, ist das Scharnier 25 in seiner Symmetrieebene geteilt, wobei die beiden Teile durch Verkleben oder Verschrauben miteinander verbunden sind. Das Scharnier 25 besitzt an beiden Enden eine maulartige Öffnung, die den Rahmen 24 drehbar aufnimmt. Diese gelenkige Verbindung der hinteren Blende 21 mit den seitlichen Blenden 22 ist besonders vorteilhaft, wenn die Blenden als Zubehörteil vertrieben werden, die vom Käufer selbst am Fahrzeug angebracht werden.

Da die hintere und die seitlichen Blenden 21, 22 aus einem winddurchlässigen netzartigen Textilmaterial bestehen, wird einerseits der Fahrer im Nackenbereich vor störenden Luftwirbeln geschützt, ohne daß die Luftströmung wie bei einer luftundurchlässigen Blende übermäßig seitwärts und nach vorne umgelenkt wird, und andererseits wird das Gesicht des Fahrers vor Verwirbelungen geschützt, ohne daß die Seitenwindempfindlichkeit des Fahrzeugs zunimmt.

### Bezugszeichenliste:

- 1: Verkleidung
- 2: Vorderrad
- 3: Hinterrad
- 4: Durchstieg
- 5: Fahrer
- 6: Aufstellfläche
- 7: Sitz
- 8: Rückenteil 9 Holm
- 10: Holm
- 11.: Lenkeinrichtung
- 12: Windschutzscheibe
- 13: Schulterschutzbügel
- 14: Beckenschutzbügel
- 15: Sicherheitsgurtband
- 16: Sicherheitsgurtband
- 17: Umlenkbügel
- 18: Rückenteil
- 19: Oberteil
- 20: Fuß
- 21: hintere Blende
- 22: seitliche Blende
- 23: Textilmaterial
- 24: Drahtrahmen
- 25: Scharnier

## Patentansprüche

1. Verwindungsteifer Fahrgastkäfig, insbesondere für Motorräder, umfassend zwei mit einem Fahrzeugrahmen verbundene, einen Überrollbügel bildende Holme, zwei mit den Holmen verbundene Schulterschutzbügel, eine zwischen den Holmen angebrachte Windschutzscheibe und ein mit dem Fahrzeugrahmen verbundenes, ein Dach bildendes Oberteil, **dadurch gekennzeichnet, daß** der Bereich zwischen den beiden Holmen (9, 10) in Höhe des Kopfes eines Fahrers (5) durch eine hintere Blende (21) geschlossen ist, und daß der Bereich zwischen dem Schulterschutzbügel (13) und dem darüber befindlichen Holm (9, 10) jeweils durch eine seitliche Blende (22) geschlossen ist, wobei die hintere und die beiden seitlichen Blenden (21, 22) aus einem winddurchlässigen Material (23) bestehen.

2. Fahrgastkäfig nach Anspruch 1, **dadurch gekennzeichnet, daß** die Blenden (21, 22) aus einem netzartigen Textilmaterial (23) bestehen.

3. Fahrgastkäfig nach Anspruch 2, **dadurch gekennzeichnet, daß** das netzartige Textilmaterial (23) im Randbereich der Blende (21, 22) an einem versteifenden Rahmen (24) befestigt ist.

4. Fahrgastkäfig nach Anspruch 3, **dadurch gekennzeichnet, daß** die Blenden (21, 22) durch Scharniere (25) miteinander gelenkig verbunden sind.

## Claims

1. A torsion-resistant passenger cage, particularly for motorcycles, comprising two longitudinal members connected to the vehicle frame and forming a roll bar, two shoulder-protecting bars connected to the longitudinal members, a windscreen attached between the longitudinal members and a top part forming a roof and connected to the vehicle frame, **characterised in that** the region between the two longitudinal members (9, 10) is closed at the driver's (5) head level by a rear shutter (21) and the region between the shoulder-protecting bar (13) and the longitudinal member (9, 10) above it is in each case closed by a side shutter (22), wherein the rear shutter and the two side shutters (21, 22) are made of a material (23) permeable to wind.

2. A passenger cage according to claim 1, **characterised in that** the shutters (21, 22) are made of a net-like textile material (23).

3. A passenger cage according to claim 2, **characterised in that** the net-like textile material (23) is fastened to a stiffening frame (24) at the edge region of the shutter (21, 22).

4. A passenger cage according to claim 3, **characterised in that** the shutters (21, 22) are pivotably connected by hinges (25).

## Revendications

1. Cage à passager rigide à la torsion, en particulier pour motocyclettes, comprenant deux montants reliés au châssis du véhicule et qui forment un arceau de retournement, deux arceaux de protection des épaules reliés aux montants, un pare-brise fixé entre les montants et une partie supérieure reliée au châssis du véhicule et qui forme un pavillon,
**caractérisée en ce que**
la région située entre les deux montants (9, 10) est fermée au niveau de la tête d'un conducteur (5) par un écran arrière (21) et la région située entre l'arceau de protection des épaules (13) et le montant (9, 10) qui se trouve au-dessus est fermée par un écran latéral (22) sur chaque côté, l'écran arrière et les deux écrans latéraux (21, 22) étant faits d'une matière perméable au vent (23).

2. Cage à passager selon la revendication 1,
**caractérisée en ce que**
les écrans (21, 22) sont faits d'une matière textile (23) du type filet.

3. Cage à passager selon la revendication 2,
**caractérisée en ce que**
la matière textile du type filet (23) est fixée à un cadre raidisseur dans la région de bord de l'écran (21, 22).

4. Cage à passager selon la revendication 3,
**caractérisée en ce que**
les écrans (21, 22) sont reliés entre eux de façon articulée par des charnières (25).
